(19) Europäisches Patentamt
European Patent Office
Office européen des brevets

(11) **EP 3 816 210 B1**

(12) **EUROPEAN PATENT SPECIFICATION**

(45) Date of publication and mention
of the grant of the patent:
**08.05.2024 Bulletin 2024/19**

(21) Application number: **19826819.5**

(22) Date of filing: **24.06.2019**

(51) International Patent Classification (IPC):
**C08J 5/18** (2006.01)     **C08K 3/013** (2018.01)
**C08L 67/02** (2006.01)    **C08J 3/22** (2006.01)
**C08K 3/22** (2006.01)

(52) Cooperative Patent Classification (CPC):
(C-Sets available)
**C08J 3/226; C08J 5/18; C08K 3/22;** C08J 2300/16;
C08J 2300/30; C08J 2367/02; C08J 2467/02;
C08K 3/013; C08K 2003/2241; Y02W 30/62 (Cont.)

(86) International application number:
**PCT/JP2019/024932**

(87) International publication number:
**WO 2020/004318 (02.01.2020 Gazette 2020/01)**

(54) **DECORATIVE SHEET AND METHOD FOR PRODUCING DECORATIVE SHEET**

DEKORFOLIE UND VERFAHREN ZUR HERSTELLUNG EINER DEKORFOLIE

FEUILLE DÉCORATIVE ET PROCÉDÉ DE PRODUCTION DE FEUILLE DÉCORATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2018 JP 2018120717**

(43) Date of publication of application:
**05.05.2021 Bulletin 2021/18**

(73) Proprietor: **C.I. TAKIRON Corporation
Kita-Ku
Osaka-Shi
Osaka 530-0001 (JP)**

(72) Inventors:
• **KANEKO, Jun
Osaka-shi, Osaka 530-0001 (JP)**
• **ITO, Shintaro
Osaka-shi, Osaka 530-0001 (JP)**

(74) Representative: **De Vries & Metman
Overschiestraat 180
1062 XK Amsterdam (NL)**

(56) References cited:
**EP-A2- 0 930 330    WO-A2-2005/105903**

JP-A- H09 239 883    JP-A- 2001 018 223
JP-A- 2002 348 448    JP-A- 2004 058 486
JP-A- 2005 187 565    JP-A- 2017 145 338

• DATABASE WPI Week 200444 26 February 2004
(2004-02-26) Thomson Scientific, London, GB;
AN 2004-462546 XP002805527, -& JP 2004 058486
A (MITSUBISHI PLASTICS IND LTD) 26 February
2004 (2004-02-26) & JP 2004 058 486 A
(MITSUBISHI PLASTICS IND) 26 February 2004
(2004-02-26)
• DATABASE WPI Week 200122 23 January 2001
(2001-01-23) Thomson Scientific, London, GB;
AN 2001-213655 XP002805528, & JP 2001 018223
A (UTSUMI KIKAKU KK) 23 January 2001
(2001-01-23) & JP 2001 018223 A (UTSUMI
KIKAKU KK) 23 January 2001 (2001-01-23)
• DATABASE WPI Week 201759 24 August 2017
(2017-08-24) Thomson Scientific, London, GB;
AN 2017-57656F XP002805529, & JP 2017 145338
A (RISUPAKKU KK) 24 August 2017 (2017-08-24)
& JP 2017 145338 A (RISU PACK CO LTD) 24
August 2017 (2017-08-24)

- **DATABASE WPI Week 199930 18 May 1999 (1999-05-18) Thomson Scientific, London, GB; AN 1999-352925 XP002805530, -& JP H11 130877 A (DAINIPPON PRINTING CO LTD) 18 May 1999 (1999-05-18) & JP H11 130877 A (MITSUBISHI KAGAKU PL FILM KK) 18 May 1999 (1999-05-18)**

(52) Cooperative Patent Classification (CPC): (Cont.)

C-Sets
**C08K 3/22, C08L 67/02**

**Description**

[Technical Field]

The present invention relates to a decorative sheet and a method for producing a decorative sheet.

[Background Art]

As a decorative sheet used for surface layers of wall materials, floor materials, fittings (doors, and the like), furniture, sinks, washstands, and the like, polyvinyl chloride sheets were once the mainstream. In recent years, as the interest in environmental problems has increased, a sheet mainly formed of polyolefin such as polyethylene or a sheet mainly formed of polyester such as polyethylene terephthalate (hereinafter also referred to as "PET") has become mainstream as a decorative sheet. In addition, there is a strong demand for the development of a decorative sheet using a recycled resin formed of waste plastic.

However, recycled resin is often colored in various colors, and a decorative sheet using recycled resin is likely to have color variation.

The following have been proposed as a decorative sheet using a recycled resin and having suppressed color variation.

(1) A decorative sheet obtained by laminating a recycled polyvinyl chloride sheet and a new polyvinyl chloride sheet having a colored layer (Patent Literature 1).
(2) A decorative sheet including 0.1 to 30% by mass of a coloring pigment with respect to polyester formed of 3 to 70% by mass of recycled polyester and 30 to 97% by mass of virgin polyester (Patent Literature 2).

However, in the decorative sheets of (1) and (2), it is necessary to increase a proportion of the virgin resin (new resin) in order to suppress the color variation, and the proportion of recycled resin is low.

The following have been proposed as sheets having a high proportion of recycled resin.

(3) A decorative plate in which a resin layer (corresponding to a decorative sheet) having a mass ratio of recycled PET/recycled polyethylene/compatibilizer/blue pigment = 85/15/5/1 is laminated on a surface of a steel sheet (paragraph [0148] of Patent Literature 3).

(4) A recycled plastic sheet obtained by mixing 3 to 10 parts by mass of a specific binder and 2 to 5 parts by mass of a modifier formed of titanium oxide with 100 parts by mass of recycled PET (Patent Literature 4).

Patent Literature 5 relates to a polyester resin decorative sheet having a laminated coating layer formed on a group layer, wherein the coating layer is formed of polyethylene terephthalate (PET) resin containing white colouring inactive particles, such as titanium dioxide.

Patent Literature 6 relates to a polyester film for decorative sheets which can maintain a high design value even when a picture-printed layer thereof suffers from dents or scratches as well as to a colour pigment-containing polyester film for decorative sheets which can reduce costs of raw materials by blending a reclaimed raw material therein, and can maintain a constant colour tone even when such a reclaimed raw material is blend.

[Citation List]

[Patent Literature]

[Patent Literature 1]
Japanese Unexamined Patent Application, First Publication No. S56-080417
[Patent Literature 2]
Japanese Unexamined Patent Application, First Publication No. H11-130877
[Patent Literature 3]
Japanese Unexamined Patent Application, First Publication No. 2009-030062
[Patent Literature 4]
Japanese Unexamined Patent Application, First Publication No. 2002-348448
[Patent Literature 5]
JP H09 23988
[Patent Literature 6]
EP 0 930 330 A

[Summary of Invention]

[Technical Problem]

The resin layer in the decorative plate of (3) is colored blue in order to suppress color variation due to the recycled resin. In a case of the mixing as the resin layer in the decorative plate of (3), the color is limited to colors having low brightness such as dark blue, black, gray, and the like, with which color variation due to the recycled resin is hardly determined. Accordingly, colors having high brightness such as white, light color, and the like cannot be used.

The recycled plastic sheet (4) is assumed to be used as a filler for a cooling tower, and a small amount of titanium oxide is added as a modifier for imparting weather resistance. The recycled plastic sheet of (4) including a small amount of titanium oxide cannot be used as a decorative sheet due to the following reasons.

. The brightness is low for white or light-colored decorative sheets.
. The other side of the sheet is transparent, and hiding power as a decorative sheet is insufficient.
. There are large variations in color between raw material lots and sheet locations.

The present invention provides a decorative sheet which is an environmentally friendly sheet having a high proportion of recycled resin in all resin components and which is a white or light-colored decorative sheet having high brightness, small color variation between raw material lots or sheet locations, high hiding power, and excellent moldability during production, and a method for producing the same.

[Solution to Problem]

A first aspect of the present invention is a decorative sheet, including: a resin component; and a titanium oxide white pigment, in which the resin component includes 90% by mass or more of a recycled PET-based resin derived from a PET bottle, the content of the titanium oxide white pigment is 10 to 18 parts by mass with respect to 100 parts by mass of the resin component, and a product of the thickness (mm) of the decorative sheet and the content (parts by mass) of the white pigment is 2.300 or more, and $b^*$ of the recycled PET-based resin in the CIE 1976 $L^*a^*b^*$ color space is 9 or less, wherein $b^*$ is a color coordinate defined in JIS Z 8781-4:2013 "Colorimetry-Part 4: CIE 1976 $L^*a^*b^*$ color space" (corresponding international standard ISO 11664-4:2008).In a further aspect, in CIE 1976 $L^*a^*b^*$ color space, $L^*$ of the decorative sheet is 92 or more, $a^*$ of the decorative sheet is - 1.5 to + 1.0, and $b^*$ of the decorative sheet is 0 to + 4.5, wherein $L^*$ is a correlation amount of brightness defined in JIS Z 8781-4:2013 "Colorimetry-Part 4: CIE 1976 $L^*a^*b^*$ color space" (corresponding international standard ISO 11664-4:2008), and $a^*$ and $b^*$ are color coordinates defined in JIS Z 8781-4:2013 "Colorimetry-Part 4: CIE 1976 $L^*a^*b^*$ color space" (corresponding international standard ISO 11664-4:2008).

In a still further aspect, the invention provides a method for producing a decorative sheet, the method including: mixing a recycled PET-based resin derived from a PET bottle with a masterbatch including a titanium oxide white pigment to prepare a resin mixture which contains a resin component including 90% by mass or more of the recycled PET-based resin and the titanium oxide white pigment having a content of 10 to 18 parts by mass with respect to 100 parts by mass of the resin component; and molding the resin mixture to obtain a decorative sheet in which a product of the thickness (mm) and the content of the titanium oxide white pigment (parts by mass) is 2.300 or more, wherein $b^*$ of the recycled PET-based resin in the CIE 1976 $L^*a^*b^*$ color space is 9 or less, wherein $b^*$ is a color coordinate defined in JIS Z 8781-4:2013 "Colorimetry-Part 4: CIE 1976 $L^*a^*b^*$ color space" (corresponding international standard ISO 11664-4:2008).

[Effects of Invention]

The decorative sheet of the present invention is an environmentally friendly sheet having a high proportion of recycled resin in all resin components and which is a white or light-colored decorative sheet having high brightness, small color variation between raw material lots or sheet locations, high hiding power, and excellent moldability during production.

According to the method for producing the decorative sheet of the present invention, it is possible to produce a decorative sheet which is an environmentally friendly sheet having a high proportion of recycled resin in all resin components and which is a white or light-colored decorative sheet having high brightness, small color variation between raw material lots or sheet locations, and high hiding power with excellent moldability.

[Description of embodiments]

The following definitions of terms apply throughout the specification and claims.

A "thickness (mm)" of a decorative sheet is an average value of a total thickness of the sheet.

"L*" is a correlation amount of brightness defined in JIS Z 8781-4:2013 "Colorimetry-Part 4: CIE 1976 L*a*b* color space" (corresponding international standard ISO 11664-4:2008).

"a*" and "b*" are color coordinates defined in JIS Z 8781-4:2013 "Colorimetry-Part 4: CIE 1976 L*a*b* color space" (corresponding international standard ISO 11664-4:2008).

The expression "to" indicating a numerical range includes numerical values before and after that as a lower limit value and an upper limit value, respectively.

<Decorative Sheet>

The decorative sheet of the present invention includes a resin component and a titanium oxide white pigment.

The decorative sheet of the present invention may include a component other than the resin component and the titanium oxide white pigment (hereinafter, also referred to as "other component"), if necessary, as long as the effect of the present invention is not impaired.

(Resin Component)

The resin component includes 90% by mass or more of a recycled PET-based resin derived from a PET bottle.

The resin component may include a resin other than the recycled PET-based resin (hereinafter, also referred to as "other resin") in a range of 10 mass% or less.

The resin component may include, for example, 90 to 100% by mass of the recycled PET-based resin derived from the PET bottle.

The recycled PET-based resin is a recycled resin derived from a PET bottle, and crushed PET bottle is preferable, because it is inexpensive and easily available. The recycled PET-based resin may include a crushed product of a label (including printing and adhesives), a cap, and the like attached to the PET bottle, as long as the effects of the present invention are not impaired.

In Japan, in order to prevent deterioration in the quality of reused products, a designated PET bottle is defined as a PET single substance (substances other than a PET main material are not added or combined) and is defined that it is not colored (excluding white due to crystallization of an opening stopper) in voluntary design guidelines described below. Therefore, currently, colored PET bottles are not produced in Japan, and it is required that colored PET bottles produced overseas for Japan be changed to non-colored PET bottles (http://www.petbottle-rec.gr.jp/qanda/sec13.html).

For PET bottles distributed in Japan, details are stipulated in the "voluntary design guidelines for designated PET bottles" established by the Council for PET Bottle Recycling under the guidance of the government (http://www.petbottle-rec.gr.jp/guideline/jisyu.html).

The voluntary design guidelines for designated PET bottles, issued by The Council for PET Bottle Recycling , prescribe the requirements for bottles, labels (including printing and adhesives), closures and other components of PET bottles used for designated products (soft drinks, milk-based beverages, alcoholic beverages and specified seasonings) under provisions of the Law for Promotion of Effective Utilization of Resources ("designated PET bottles"), so as to ensure containers are hygienic and otherwise have high suitability for recycling when reprocessed after use.

As a matter of course, the members (groups and companies) of the Council for PET Bottle Recycling should comply with the voluntary design guidelines, and in a case of producing, importing, and selling drinks, alcoholic beverages, and specific seasonings with designated PET bottles or in a case of producing and importing the designated PET bottles and attached packaging materials, even non-members also need to comply with the voluntary design guidelines, if the products are sold or used in Japan.

Accordingly, most PET bottles distributed in Japan are non-colored, and recycled PET-based resin derived from PET bottles is almost transparent.

Although recycled PET-based resin is almost transparent, it tends to be yellowish black (the value of b* is high and the L* value is low in the CIE 1976 L*a*b* color space) due to a heat history received during thermoforming or a mixing of the labels and the like. Therefore, previously, there has been hesitation in using recycled PET-based resin as a material of a white or light-colored decorative sheet having high brightness. In the present invention, as will be described later, it is possible to use recycled PET-based resin as a material for a white or light-colored decorative sheet having high brightness by setting the content of a white pigment to a specific range and a product of the thickness of the decorative sheet and the content of the white pigment to a specific range.

A crystallization temperature of the recycled PET-based resin is preferably 145°C or lower, more preferably 120°C to 145°C, and even more preferably 125°C to 140°C.

The crystallization temperature of the recycled PET-based resin is measured using a thermal analyzer (differential scanning calorimeter (DSC)).

An intrinsic viscosity (IV value) of the recycled PET-based resin is preferably 0.60 or more, more preferably 0.65 to 0.85, and even more preferably 0.70 to 0.83. In a case where the intrinsic viscosity (IV value) of the recycled PET-based resin is less than the lower limit value of the above range, a melt viscosity may decrease when the pigment is added, which may cause a problem in extrusion moldability. In a case where the intrinsic viscosity (IV value) of the recycled PET-based resin exceeds the upper limit value of the above range, the viscosity may increase, which may cause a problem in extrusion moldability.

The intrinsic viscosity (IV value) of the recycled PET-based resin is measured by the test method described in JIS K 7390:2003.

The b* of the recycled PET-based resin in the CIE 1976 L*a*b* color space is 9 or less, more preferably -6 to 8, and even more preferably 0 to 7. In a case where the b* of the recycled PET-based resin is equal to or more than the lower limit value of the above range, a proportion of a colored PET bottle is low, and it is easy to produce a white or light-colored decorative sheet having high brightness. In a case where the b* of the recycled PET-based resin is equal to or less than the upper limit value of the above range, the yellow color of the recycled PET-based resin is suppressed, and a white or light-colored decorative sheet having high brightness is easily produced, even if a blue colorant is added.

The b* of the recycled PET-based resin is measured by the test method described in JIS K 7390:2003.

The L* of the recycled PET-based resin in the CIE 1976 L*a*b* color space is preferably 65 or more, more preferably 68 or more, and even more preferably 70 or more. In a case where the L* of the recycled PET-based resin is equal to or more than the lower limit value of the above range, it is easy to produce a white or light-colored decorative sheet having high brightness.

The upper limit value of L* of the recycled PET-based resin is not particularly limited and may be 90 or less, for example.

The L* of the recycled PET-based resin may be 65 to 90, 68 to 90, or 70 to 90.

Examples of other resins include resins used in masterbatches containing a white pigment, and resins added for the purpose of suppressing color variation of the decorative sheet, improving the properties of the decorative sheet, and the like. Specific examples of other resins include virgin PET-based resins, recycled resins other than the recycled PET-based resins (excluding polyvinyl chloride), and virgin resins other than the virgin PET-based resins (excluding polyvinyl chloride).

(White Pigment)

. Titanium oxide is used as the white pigment, from the viewpoint of high hiding power. Examples of titanium oxide include rutile-type titanium oxide and anatase-type titanium oxide, and rutile-type titanium oxide is preferable, from the viewpoint of low activity as a catalyst.

The content of the titanium oxide white pigment is 10 to 18 parts by mass, preferably 11 to 17 parts by mass, and more preferably 12 to 16 parts by mass with respect to 100 parts by mass of the resin component. In a case where the content of the titanium oxide white pigment is equal to or more than the lower limit value of the above range, a white or light-colored decorative sheet having a small color variation between raw material lots or sheet locations and high brightness is obtained. In a case where the content of the titanium oxide white pigment is equal to or less than the upper limit value of the above range, abnormal extrusion behavior (abnormal width due to a decrease in melt viscosity, and the like) is suppressed, and moldability at the time of producing a decorative sheet is excellent.

(Other Components)

Examples of other components include pigments other than the white pigment, a compatibilizer, an ultraviolet absorber, a light stabilizer, an antioxidant, an antistatic agent, a storage stabilizer, a lubricant, a fillers, and the like.

The content of the other components is preferably 15 parts by mass or less, more preferably 10 parts by mass or less, and even more preferably 5 parts by mass or less with respect to 100 parts by mass of the resin component.

(Decorative Sheet)

The L* of the decorative sheet of the present invention in the CIE 1976 L*a*b* color space is preferably 92 or more, more preferably 94 or more, and even more preferably 95 or more. In a case where the L* of the decorative sheet is equal to or more than the lower limit value of the above range, the brightness of the decorative sheet sufficiently increases. The higher L* of the decorative sheet is preferable, and the upper limit value is not particularly limited but is usually 100.

The L* of the decorative sheet may be 92 to 100, 94 to 100, or 95 to 100.

The a* of the decorative sheet of the present invention in the CIE 1976 L*a*b* color space is preferably - 1.5 to + 1.0, more preferably - 1.2 to + 0.5, and even more preferably -1.0 to 0. In a case where the a* of the decorative sheet is equal to or more than the lower limit value of the above range, a green color of the decorative sheet is suppressed. In a case where the a* of the decorative sheet is equal to or less than the upper limit value of the above range, a red color of the decorative sheet is suppressed.

The b* of the decorative sheet of the present invention in the CIE 1976 L*a*b* color space is preferably 0 to + 4.5, more preferably 0 to + 4, and even more preferably 0 to + 3.5. In a case where the b* of the decorative sheet is equal to or more than the lower limit value of the above range, a blue color of the decorative sheet is suppressed. In a case where the b* of the decorative sheet is equal to or less than the upper limit value of the above range, a yellow color of the decorative sheet is suppressed.

The thickness of the decorative sheet of the present invention is preferably 0.15 to 0.4 mm and more preferably 0.20 to 0.35 mm. In a case where the thickness of the decorative sheet is equal to or more than the lower limit value of the above range, it is easy to increase mechanical strength and hiding power of the decorative sheet. In a case where the thickness of the decorative sheet is equal to or less than the upper limit value of the above range, three-dimensional processability and flexibility of the decorative sheet become excellent.

In the decorative sheet of the present invention, a product of the thickness (mm) of the decorative sheet and the content (parts by mass) of the white pigment is 2.300 or more, preferably 2.500 or more, and more preferably 2.700 or more. In a case where the product of the thickness of the decorative sheet and the content of the white pigment of the decorative sheet is equal to or more than the lower limit value of the above range, the hiding power of the decorative sheet sufficiently increases. The higher product of the thickness of the decorative sheet and the content of the titanium oxide white pigment is preferable, and the upper limit value is not particularly limited. The upper limit value of the product of the thickness of the decorative sheet and the content of the white pigment may be, for example, 7.200.

The product of the thickness of the decorative sheet and the content of the white pigment may be 2.300 to 7.200, 2.500 to 7.200, or 2.700 to 7.200.

The decorative sheet of the present invention may include a functional layer for imparting various functions as needed, within a range not negatively affecting the effects of the present invention. Examples of the functional layer include a coating layer for imparting stain resistance and weather resistance, a transfer layer, and a printing layer for imparting designability.

A surface shape of the decorative sheet is not particularly limited, and may be smooth or may have a shape having irregularities due to embossing or the like.

The decorative sheet of the present invention can be produced, for example, by molding a resin mixture including a resin component and a white pigment into a sheet shape.

The resin mixture includes a resin component containing 90% by mass or more of a recycled PET-based resin, and 10 to 18 parts by mass of a titanium oxide white pigment with respect to 100 parts by mass of the resin component.

The resin mixture can be prepared, for example, by mixing the recycled PET-based resin with a masterbatch including a titanium oxide white pigment.

Examples of the method for molding the resin mixture include an extrusion molding method and a calendar molding method.

The decorative sheet may be unstretched or stretched.

(Action Mechanism)

In the decorative sheet of the present invention described above, since the resin component contains 90% by mass or more of the recycled PET-based resin derived from the PET bottle, it is more environmentally friendly compared to a decorative sheet including polyvinyl chloride and a decorative sheet having a low proportion of the recycled resin in all the resin components.

In addition, in the decorative sheet of the present invention, almost transparent recycled PET-based resin is used as the recycled resin, and the content of the titanium oxide white pigment is 10 parts by mass or more with respect to 100 parts by mass of the resin component. Accordingly, the white or light-colored decorative sheet has a high proportion of the recycled resin in all of the resin components, high brightness, and a small color variation between raw material lots or sheet locations.

In the decorative sheet of the present invention, since the product of the thickness (mm) of the decorative sheet and the content (parts by mass) of the white pigment is 2.300 or more, the hiding power is high.

In addition, in the decorative sheet of the present invention, since the content of the titanium oxide white pigment is 18 parts by mass or less with respect to 100 parts by mass of the resin component, the moldability during production is also excellent.

The decorative sheet of the present invention is used as a surface layer of wall materials, floor materials, fittings (doors, and the like), furniture, sinks, washstands, and the like, and is preferably used as a surface layer of doors for furniture, sinks, washstands, and the like.

[Examples]

Hereinafter, the present invention will be described more specifically with reference to examples, but the present invention is not limited to these examples.

(Color Measurement Method)

The color of a decorative film was measured in a state with a predetermined backer at the back using a spectrophotometer (CCM) (COLOR-7 manufactured by Kurabo Industries Ltd.) under a condition of a light source D65 and a viewing angle of 10°, and L*, a*, and b* in the CIE 1976 L*a*b* color space were obtained.

(Measurement of Transparent Sheet)

For a transparent sheet of a reference example, the color was measured at three points using a white base material (L* = 96.82, a* = - 1.03, b* = 1.57) as the backer to obtain L*, a*, and b*, and average values at the three points were obtained.

(Color Measurement of Decorative Sheet)

For each of four types of decorative sheets that differ only in the lot of recycled PET-based resin, the color was measured at three points using a color measurement table (L* = 99.11, a* = - 0.09, b* = 0.56) as a backer to obtain L*, a*, and b*, and average values at the three points were obtained. Further, an average value of four lots was obtained.
A color difference $\Delta E$ was obtained by the following equation from L*, a*, and b* (average value of four lots) of the decorative sheet and $L_t^*$, $a_t^*$, and $b_t^*$ of target color (desired color as a product) of the decorative sheet.

$$\Delta E = \{(L^* - L_t^*)^2 + (a^* - a_t^*)^2 + (b^* - b_t^*)^2\}^{1/2}$$

(Hiding Power)

For each of four types of decorative sheets that differ only in the lot of recycled PET-based resin, the color was measured at three points using a white base material (L* = 93.38, a* = - 0.85, b* = 4.99) as a backer to obtain $L_1^*$, $a_1^*$, and $b_1^*$, and average values at the three points were obtained.
For each of the same four types of decorative sheets, the color was measured at three points using a MDF base material (L* = 66.03, a* = 9.24, b* = 21.90) as a backer to obtain $L_2^*$, $a_2^*$, $b_2^*$, and average values at the three points were obtained.
A color difference $\Delta E_A$ was obtained by the following equation from the $L_1^*$, $a_i^*$, and $b_1^*$ (average values at three points) and $L_2^*$, $a_2^*$, and $b_2^*$ (average values at three points) of the decorative sheet, and an average value of four lots was obtained.

$$\Delta E_A = \{(L_1^* - L_2^*)^2 + (a_1^* - a_2^*)^2 + (b_1^* - b_2^*)^2\}^{1/2}$$

It is empirically known that, in a case where the $\Delta E_A$ is less than 0.6, the hiding power of the decorative sheet is sufficient without practical problems.

(Color Variation between Raw Material Lots)

For each of four types of decorative sheets that differ only in the lot of recycled PET-based resin, the color was measured at three points using a color measurement table (L* = 99.11, a* = - 0.09, b* = 0.56) as a backer to obtain L*, a*, and b*, and average values at the three points were obtained.
A color difference $\Delta E_B$ was obtained by the following equation from L*, a*, and b* (average value of four lots) of the decorative sheet and $L_t^*$, $a_t^*$, and $b_t^*$ of target color (desired color as a product) of the decorative sheet.

$$\Delta E_B = \{(L^* - L_t^*)^2 + (a^* - a_t^*)^2 + (b^* - b_t^*)^2\}^{1/2}$$

It is empirically known that, in a case where a maximum value of $\Delta E_B$ of the four lots is less than 0.6, the color variation between raw material lots is small without practical problems.

(Color Variation between Sheet Locations)

For each of four types of decorative sheets that differ only in the lot of recycled PET-based resin, the color was measured at 50 points at interval of 30 cm using a color measurement table (L* = 99.11, a* = - 0.09, b* = 0.56) as a backer to obtain L*, a*, and b*.
A color difference ΔEc was obtained by the following equation from L*, a*, and b* at each measurement location of the decorative sheet and average values $L_{av}*$, $a_{av}*$, and $b_{av}*$ at 50 locations.

$$\Delta E_C = \{(L^* - L_{av}*)^2 + (a^* - a_{av}*)^2 + (b^* - b_{av}*)^2\}^{1/2}$$

It is empirically known that, in a case where a maximum value of ΔEc at all measurement locations including four lots is less than 0.3, the color variation between sheet locations is small without practical problems.

(Moldability)

A width change of the decorative sheet in a case of producing the decorative sheet was evaluated based on the following criteria.

A: No change in width of the decorative sheet.
B: The width of the decorative sheet changes.

(Reference Example 1)

For each of virgin PET-based resins with four lots (manufactured by China Resources, CR8816, Lots A to D, crystallization temperature of 133°C, and intrinsic viscosity (IV value) of 0.80), the sheet-molding processing was performed at a temperature of 265°C and screw rotation of 25 rpm using LABO PLASTOMII,L (MODEL 30C150) manufactured by Toyo Seiki Co., Ltd., and four types of transparent sheets (width of 150 mm and thickness of 0.3 mm) were obtained. For each transparent sheet, L*, a*, and b* (average values at three points) were obtained. The results are shown in Table 1.

[Table 1]

|  | Lot A | Lot B | Lot C | Lot D | Maximum value - minimum value |
|---|---|---|---|---|---|
| L* | 95.05 | 94.87 | 95.10 | 94.88 | 0.23 |
| a* | -0.99 | -0.95 | -1.00 | -0.96 | 0.05 |
| b* | 1.67 | 1.71 | 1.48 | 1.68 | 0.23 |

(Reference Example 2)

For each of recycled PET-based resins with four lots (manufactured by Utsumi Recycle Systems Inc., UK-31C, lots A to D), the sheet-molding processing was performed at a temperature of 265°C and screw rotation of 25 rpm using LABO PLASTOMILL (MODEL 30C150) manufactured by Toyo Seiki Co., Ltd., and four types of transparent sheets (width of 150 mm and thickness of 0.3 mm) were obtained. For each transparent sheet, L*, a*, and b* (average values at three points) were obtained. The results are shown in Table 2. Compared to Reference Example 1 using the virgin PET-based resin, the color variation was great. In addition, b* (yellow color) was great.

[Table 2]

|  | Lot A | Lot B | Lot C | Lot D | Maximum value - minimum value |
|---|---|---|---|---|---|
| L* | 95.27 | 95.18 | 94.98 | 95.07 | 0.29 |
| a* | -1.16 | -1.15 | -1.21 | -1.23 | 0.07 |

(continued)

|  | Lot A | Lot B | Lot C | Lot D | Maximum value - minimum value |
|---|---|---|---|---|---|
| b* | 2.41 | 2.74 | 2.93 | 2.94 | 0.53 |

(Reference Example 3)

For each of recycled PET-based resins with four lots (manufactured by ALIPLAST of Italy, Alimpet, Lots A to D, crystallization temperature of 130°C, and intrinsic viscosity (IV value) of 0.77), the sheet-molding processing was performed at a temperature of 265°C and screw rotation of 25 rpm using LABO PLASTOMILL (MODEL 30C150) manufactured by Toyo Seiki Co., Ltd., and four types of transparent sheets (width of 150 mm and thickness of 0.3 mm) were obtained. For each transparent sheet, L*, a*, and b* (average values at three points) were obtained. The results are shown in Table 3. Compared to Reference Example 1 using the virgin PET-based resin, the color variation was great. In addition, for the lots B to D, b* (yellow color) was great. Like lot A, b* may be small, but at the same time, L* may also decrease.

[Table 3]

|  | Lot A | Lot B | Lot C | Lot D | Maximum value - minimum value |
|---|---|---|---|---|---|
| L* | 92.63 | 92.76 | 93.52 | 93.23 | 0.89 |
| a* | -2.17 | -2.08 | -1.75 | -2.01 | 0.42 |
| b* | 1.16 | 2.06 | 2.34 | 2.44 | 1.28 |

(Target Color)

In a case of using the color measurement table (L* = 99.11, a* = - 0.09, b* = 0. 56) as the backer, regarding the target color of the decorative sheet using UK-31C manufactured by Utsumi Recycle Systems Inc. as the recycled PET-based resin, Lt* = 97.45, at* = - 0.36, and bt* = 2.71.

In a case of using the color measurement table (L* = 99.11, a* = - 0.09, b* = 0. 56) as the backer, regarding the target color of the decorative sheet using Alimpet manufactured by ALIPLAST of Italy as the recycled PET-based resin, Lt* = 95.52, at* = - 1.10, and bt* = 2.16.

(Example 1)

For each of the recycled PET-based resin with four lots (manufactured by Utsumi Recycle Systems Inc., UK-31C, lots A to D), a decorative sheet was prepared as follows.

For a resin mixture obtained by adding a masterbatch (including titanium oxide and virgin PET (A-PET)) to the recycled PET-based resin, the sheet-molding processing was performed at a temperature of 265°C and screw rotation of 25 rpm using LABO PLASTOMILL (MODEL 30C150) manufactured by Toyo Seiki Co., Ltd., and a decorative sheet (length of 15 m, width of 150 mm, and thickness of 0.25 mm) was obtained. Table 4 shows the proportion of the recycled PET-based resin in the resin component and the content of the white pigment with respect to the resin component.

The decorative sheet was cut at intervals of 30 cm to prepare a sample for evaluation. Table 4 shows the color measurement results and various evaluation results.

(Example 2)

For each of the recycled PET-based resin with four lots (ALIPLAST of Italy, Alimpet, lots A to D), a decorative sheet was prepared as follows.

For a resin mixture obtained by adding a masterbatch (including titanium oxide and virgin A-PET) to the recycled PET-based resin, the sheet-molding processing was performed at a temperature of 265°C and screw rotation of 25 rpm using LABO PLASTOMILL (MODEL 30C150) manufactured by Toyo Seiki Co., Ltd., and a decorative sheet (length of 15 m, width of 150 mm, and thickness of 0.25 mm) was obtained. Table 4 shows the proportion of the recycled PET-based resin in the resin component and the content of the white pigment with respect to the resin component.

The decorative sheet was cut at intervals of 30 cm to prepare a sample for evaluation. Table 4 shows the color measurement results and various evaluation results.

(Examples 3 to 5 and Comparative Examples 1 to 5)

A decorative sheet was produced in the same manner as in Example 2, except that the thickness of the decorative sheet, the proportion of recycled PET-based resin in the resin component, and the content of the white pigment with respect to the resin component were changed as shown in Tables 4 to 6. Tables 4 to 6 show the proportion of the recycled PET-based resin in the resin component and the content of the white pigment with respect to the resin component.

The decorative sheet was cut at intervals of 30 cm to prepare a sample for evaluation. Tables 4 to 6 show the color measurement results and various evaluation results.

[Table 4]

| | | Example 1 | Example 2 | Example 3 |
|---|---|---|---|---|
| Thickness of decorative sheet (mm) | | 0.25 | 0.25 | 0.30 |
| Recycled PET-based resin in resin component (% by mass) | | 91.9 | 91.9 | 93.3 |
| White pigment with respect to 100 parts by mass of resin component (parts by mass) | | 12.1 | 12.1 | 10.1 |
| Product of thickness of decorative sheet and content of white pigment | | 3.025 | 3.025 | 3.030 |
| Measurement value | $L^*$ | 97.54 | 95.92 | 95.20 |
| | $a^*$ | -0.41 | -1.06 | -1.10 |
| | $b^*$ | 2.66 | 2.23 | 2.34 |
| Target color | $L_t^*$ | 97.45 | 95.52 | 95.52 |
| | $a_t^*$ | -0.36 | -1.10 | -1.10 |
| | $b_t^*$ | 2.71 | 2.16 | 2.16 |
| Color difference $\Delta E$ between measurement value and target color | | 0.11 | 0.41 | 0.37 |
| Hiding power | $\Delta E_A$ | 0.28 | 0.22 | 0.27 |
| Color variation between raw material lots | maximum value of $\Delta E_B$ | 0.30 | 0.45 | 0.55 |
| Color variation between sheet locations | maximum value of $\Delta E_C$ | 0.15 | 0.20 | 0.25 |
| Moldability | | A | A | A |

[Table 5]

| | | Example 4 | Example 5 | Comparative Example 1 |
|---|---|---|---|---|
| Thickness of decorative sheet (mm) | | 0.25 | 0.25 | 0.15 |
| Recycled PET-based resin in resin component (% by mass) | | 93.4 | 90.5 | 90.3 |
| White pigment with respect to 100 parts by mass of resin component (parts by mass) | | 10.0 | 17.6 | 14.6 |
| Product of thickness of decorative sheet and content of white pigment | | 2.500 | 4.400 | 2.190 |
| Measurement value | $L^*$ | 95.15 | 95.40 | 95.83 |
| | $a^*$ | -1.11 | -1.11 | -1.12 |
| | $b^*$ | 2.30 | 2.11 | 1.90 |

(continued)

|  |  | Example 4 | Example 5 | Comparative Example 1 |
|---|---|---|---|---|
| Target color | $L_t^*$ | 95.52 | 95.52 | 95.52 |
| | $a_t^*$ | -1.10 | -1.10 | -1.10 |
| | $b_t^*$ | 2.16 | 2.16 | 2.16 |
| Color difference ΔE between measurement value and target color | | 0.40 | 0.13 | 0.41 |
| Hiding power | $\Delta E_A$ | 0.45 | 0.08 | 0.70 |
| Color variation between raw material lots | maximum value of $\Delta E_B$ | 0.50 | 0.25 | 0.35 |
| Color variation between sheet locations | maximum value of $\Delta E_C$ | 0.25 | 0.06 | 0.20 |
| Moldability | | A | A | A |

[Table 6]

|  |  | Comparative Example 2 | Comparative Example 3 | Comparative Example 4 | Comparative Example 5 |
|---|---|---|---|---|---|
| Thickness of decorative sheet (mm) | | 0.15 | 0.35 | 0.25 | 0.25 |
| Recycled PET-based resin in resin component (% by mass) | | 90.2 | 94.3 | 94.0 | 90.2 |
| White pigment with respect to 100 parts by mass of resin component (parts by mass) | | 18.2 | 8.5 | 9.0 | 18.2 |
| Product of thickness of decorative sheet and content of white pigment | | 2.730 | 2.975 | 2.250 | 4.550 |
| Measurement value | L* | 95.60 | 94.93 | 94.99 | 95.63 |
| | a* | -1.08 | -1.10 | -1.04 | -1.12 |
| | b* | 2.11 | 2.51 | 2.48 | 2.05 |
| Target color | $L_t^*$ | 95.52 | 95.52 | 95.52 | 95.52 |
| | $a_t^*$ | -1.10 | -1.10 | -1.10 | -1.10 |
| | $b_t^*$ | 2.16 | 2.16 | 2.16 | 2.16 |
| Color difference ΔE between measurement value and target color | | 0.10 | 0.69 | 0.62 | 0.16 |
| Hiding power | $\Delta E_A$ | 0.45 | 0.35 | 0.65 | 0.05 |
| Color variation between raw material lots | maximum value of $\Delta E_B$ | 0.20 | 0.75 | 0.65 | 0.10 |
| Color variation between sheet locations | maximum value of $\Delta E_C$ | 0.15 | 0.40 | 0.35 | 0.05 |
| Moldability | | B | A | A | B |

In Comparative Examples 1 to 5, L*, a*, and b* were within the preferable ranges in the present invention, but in Comparative Examples 3 and 4 in which the content of the white pigment with respect to the resin component was small, the color difference ΔE from the target color was increased.

In Comparative Example 1, the hiding power was insufficient, because the product of the thickness of the decorative sheet and the content of the white pigment was small.

In Comparative Example 2, the moldability was poor, because the content of the white pigment with respect to the resin component was great.

In Comparative Example 3, the color variation between the raw material lots and the sheet locations was great, because the content of the white pigment with respect to the resin component was small.

In Comparative Example 4, the hiding power was insufficient, because the product of the thickness of the decorative sheet and the content of the white pigment was small. In addition, the color variation between the raw material lots and the sheet locations was great, because the content of the white pigment with respect to the resin component was small.

In Comparative Example 5, the moldability was poor, because the content of the white pigment with respect to the resin component was great.

(Comparative Example 6)

For each of the recycled PET-based resin with four lots (ALIPLAST of Italy, Alimpet, lots A to D), a decorative sheet was prepared as follows.

For a resin mixture obtained by mixing 90 parts by mass of the recycled PET-based resin and 10 parts by mass of virgin PET-based resin (manufactured by China Resources, CR8816, Lot A) and adding a masterbatch (containing titanium oxide and virgin A-PET) thereto, the sheet-molding processing was performed at a temperature of 265°C and screw rotation of 44 rpm using an extruder (OSE-35cpmm extruder) manufactured by Nagata Seisakusho Co., Ltd. and a decorative sheet (length of 15 m, width of 150 mm, and thickness of 0.25 mm) was obtained. Table 7 shows the proportion of the recycled PET-based resin in the resin component and the content of the white pigment with respect to the resin component.

The decorative sheet was cut at intervals of 30 cm to prepare a sample for evaluation. The various evaluation results are shown in Table 7.

(Comparative Example 7)

For each of the recycled PET-based resin with four lots (ALIPLAST of Italy, Alimpet, lots A to D), a decorative sheet was prepared as follows.

A resin mixture for a surface layer was prepared by adding a masterbatch (containing titanium oxide and virgin A-PET) to the virgin PET-based resin (manufactured by China Resources, CR8816, Lot A).

A resin mixture for a base material layer was prepared by adding a masterbatch (containing titanium oxide and virgin A-PET) to the recycled PET-based resin.

For the resin mixture for a surface layer and the resin mixture for a base material layer, the molding processing was performed at a temperature of 265°C and screw rotation of 44 rpm using an extruder (OSE-35cpmm extruder) manufactured by Nagata Seisakusho Co., Ltd. on the base material layer side, and the molding process was performed at a temperature of 265°C and screw rotation of 5 rpm using an extruder (OSE-35cpmm extruder) manufactured by Nagata Seisakusho Co., Ltd. on the surface layer side. Then, a decorative sheet (length of 15 m, width of 1440 mm, and thickness of 0.25 mm) was obtained in which a surface layer (thickness of 25 $\mu$m) mainly composed of virgin PET-based resin and a base material layer (thickness of 225 $\mu$m) mainly composed of the recycled PET-based resin were laminated. Table 7 shows the proportion of the recycled PET-based resin in the resin component of the entire decorative sheet and the content of the white pigment with respect to the resin component of the entire decorative sheet.

The decorative sheet was cut at intervals of 30 cm to prepare a sample for evaluation. The color measurement was performed with respect to the surface layer side. The various evaluation results are shown in Table 7.

[Table 7]

| | Comparative Example 6 | Comparative Example 7 |
|---|---|---|
| Thickness of decorative sheet (mm) | 0.25 | 0.25 |
| Recycled PET-based resin in resin component (% by mass) | 83.6 | 83.6 |
| White pigment with respect to 100 parts by mass of resin component (parts by mass) | 10.6 | 11.2 |

(continued)

| | | Comparative Example 6 | Comparative Example 7 |
|---|---|---|---|
| Product of thickness of decorative sheet and content of white pigment | | 2.650 | 2.800 |
| Target color | $L_t^*$ | 95.52 | 95.52 |
| | $a_t^*$ | -1.10 | -1.10 |
| | $b_t^*$ | 2.16 | 2.16 |
| Hiding power | $\Delta E_A$ | 0.52 | 0.40 |
| Color variation between raw material lots | maximum value of $\Delta E_B$ | 0.40 | 0.45 |
| Color variation between sheet locations | maximum value of $\Delta E_C$ | 0.20 | 0.20 |
| Moldability | | A | A |

Comparative Example 6 is an example in which the proportion of the virgin PET-based resin was increased, and various evaluation results were excellent. However, since the proportion of virgin PET-based resin was great, it is not environmentally friendly.

Comparative Example 7 is an example in which a surface layer mainly composed of the virgin PET-based resin was provided, and various evaluation results were excellent. However, since the proportion of the virgin PET-based resin was great in the entire decorative sheet, it is not environmentally friendly.

[Industrial Applicability]

The decorative sheet of the present invention is environmentally friendly and is useful as a white or light-colored decorative sheet having high brightness.

**Claims**

1. A decorative sheet, comprising:

   a resin component; and
   a titanium oxide white pigment,
   wherein the resin component includes 90% by mass or more of a recycled PET-based resin derived from a PET bottle,
   the content of the titanium oxide white pigment is 10 to 18 parts by mass with respect to 100 parts by mass of the resin component,
   a product of the thickness (mm) of the decorative sheet and the content (parts by mass) of the titanium oxide white pigment is 2.300 or more, and
   b* of the recycled PET-based resin in the CIE 1976 L*a*b* color space is 9 or less, wherein b* is a color coordinate defined in JIS Z 8781-4:2013 "Colorimetry-Part 4: CIE 1976 L*a*b* color space " (corresponding international standard ISO 11664-4:2008), determined according to the test method described in JIS K 7390:2003.

2. The decorative sheet according to Claim 1, wherein, in CIE 1976 L*a*b* color space, L* of the decorative sheet is 92 or more, a* of the decorative sheet is -1.5 to + 1.0, and b* of the decorative sheet is 0 to + 4.5, wherein

   L* is a correlation amount of brightness defined in JIS Z 8781-4:2013 "Colorimetry-Part 4: CIE 1976 L*a*b* color space" (corresponding international standard ISO 11664-4:2008), and
   a* and b* are color coordinates defined in JIS Z 8781-4:2013 "Colorimetry-Part 4: CIE 1976 L*a*b* color space" (corresponding international standard ISO 11664-4:2008) and determined according the specification.

3. A method for producing a decorative sheet, the method comprising:

mixing a recycled PET-based resin derived from a PET bottle with a masterbatch including a titanium oxide white pigment to prepare a resin mixture which contains a resin component including 90% by mass or more of the recycled PET-based resin and the titanium oxide white pigment having a content of 10 to 18 parts by mass with respect to 100 parts by mass of the resin component; and

molding the resin mixture to obtain a decorative sheet in which a product of the thickness (mm) and the content of the titanium oxide white pigment (parts by mass) is 2.300 or more, wherein

$b*$ of the recycled PET-based resin in the CIE 1976 $L*a*b*$ color space is 9 or less, wherein $b*$ is a color coordinate defined in JIS Z 8781-4:2013 "Colorimetry-Part 4: CIE 1976 $L*a*b*$ color space " (corresponding international standard ISO 11664-4:2008), determined according the test method described in JIS K 7390:2003.

## Patentansprüche

1. Eine Dekorfolie, umfassend:

eine Harzkomponente; und
ein Titanoxid-Weißpigment,
wobei die Harzkomponente 90 Massen-% oder mehr eines recycelten Harzes auf PET-Basis, gewonnen aus einer PET-Flasche, beinhaltet,
der Gehalt des Titanoxid-Weißpigments 10 bis 18 Massenteile, bezogen auf 100 Massenteile der Harzkomponente, beträgt,
ein Produkt aus der Dicke (mm) der Dekorfolie und des Gehalts (Massenteile) des Titanoxid-Weißpigments 2,300 oder mehr beträgt und
$b*$ des recycelten Harzes auf PET-Basis im CIE 1976 $L*a*b*$-Farbraum 9 oder weniger beträgt, wobei $b*$ eine Farbkoordinate, definiert in JIS Z 8781-4:2013 "Kolorimetrie-Teil 4: CIE 1976 $L*a*b*$ Farbenraum" (entsprechende internationale Norm ISO 11664-4:2008), bestimmt gemäß dem in JIS K 7390:2003 beschriebenen Testverfahren, ist.

2. Die Dekorfolie gemäß Anspruch 1, wobei im CIE 1976 $L*a*b*$-Farbraum, $L*$ der Dekorfolie 92 oder mehr beträgt, $a*$ der Dekorfolie -1,5 bis +1,0 beträgt und $b*$ der Dekorfolie 0 bis +4,5 beträgt, wobei

$L*$ eine Korrelationsmenge der Helligkeit, definiert in JIS Z 8781-4:2013 "Kolorimetrie-Teil 4: CIE 1976 $L*a*b*$-Farbraum" (entsprechende internationale Norm ISO 11664-4:2008) ist und
$a*$ und $b*$ Farbkoordinaten, definiert in JIS Z 8781-4:2013 "Kolorimetrie-Teil 4: CIE 1976 $L*a*b*$-Farbraum" (entsprechende internationale Norm ISO 11664-4:2008) sind und gemäß der Beschreibung bestimmt sind.

3. Ein Verfahren zur Herstellung einer Dekorfolie, wobei das Verfahren umfasst:

Mischen eines recycelten Harzes auf PET-Basis, gewonnen aus einer PET-Flasche, mit einem Masterbatch das ein Titanoxid-Weißpigment beinhaltet, um ein Harzgemisch herzustellen, welches eine Harzkomponente, die 90 Massen-% oder mehr des recycelten Harzes auf PET-Basis beinhaltet, und das Titanoxid-Weißpigment mit einem Gehalt von 10 bis 18 Massenteilen, bezogen auf 100 Massenteile der Harzkomponente, enthält; und
Formen des Harzgemischs, um eine Dekorfolie zu erhalten, in welcher ein Produkt aus der Dicke (mm) und des Gehalts des Titanoxid-Weißpigments (Massenteile) 2,300 oder mehr beträgt, wobei
$b*$ des recycelten Harzes auf PET-Basis in dem CIE 1976 $L*a*b*$-Farbraum 9 oder weniger beträgt, wobei $b*$ eine Farbkoordinate, definiert in JIS Z 8781-4:2013 "Kolorimetrie-Teil 4: CIE 1976 $L*a*b*$ Farbraum" (entsprechende internationale Norm ISO 11664-4:2008), bestimmt gemäß dem in JIS K 7390:2003 beschriebenen Testverfahren, ist.

## Revendications

1. Feuille décorative, comprenant :

un composant de résine ; et
un pigment blanc à base d'oxyde de titane,

dans laquelle le composant de résine comporte 90 % en masse ou plus d'une résine à base de PET recyclé dérivée d'une bouteille en PET,

la teneur en pigment blanc à base d'oxyde de titane est de 10 à 18 parties en masse par rapport à 100 parties en masse du composant de résine,

un produit de l'épaisseur (mm) de la feuille décorative et de la teneur (parties en masse) en pigment blanc à base d'oxyde de titane est de 2 300 ou plus, et

le b* de la résine à base de PET recyclé dans l'espace chromatique L*a*b CIE 1976 est de 9 ou moins, dans laquelle b* est une coordonnée de couleur définie dans JIS Z 8781-4:2013 « Colorimétrie - Partie 4 : Espace chromatique L*a*b CIE 1976 » (norme internationale correspondante : ISO 11664-4:2008), déterminée selon la méthode d'essai décrite dans JIS K 7390:2003.

2. Feuille décorative selon la revendication 1, dans laquelle, dans l'espace chromatique L*a*b CIE 1976, le L* de la feuille décorative est de 92 ou plus, le a* de la feuille décorative est de -1,5 à +1,0 et le b* de la feuille décorative est de 0 à +4,5, dans laquelle

L* est une quantité de luminosité de corrélation définie dans JIS Z 8781-4:2013 « Colorimétrie - Partie 4 : Espace chromatique L*a*b CIE 1976 » (norme internationale correspondante : ISO 11664-4:2008), et

a* et b* sont des coordonnées de couleur définies dans JIS Z 8781-4:2013 « Colorimétrie - Partie 4 : Espace chromatique L*a*b CIE 1976 » (norme internationale correspondante : ISO 11664-4:2008) et déterminées selon la spécification.

3. Procédé de production d'une feuille décorative, le procédé comprenant :

le mélange d'une résine à base de PET recyclé dérivée d'une bouteille en PET avec un mélange-maître comportant un pigment blanc à base d'oxyde de titane pour préparer un mélange de résine qui contient un composant de résine comportant 90 % en masse ou plus de la résine à base de PET recyclé et du pigment blanc à base d'oxyde de titane ayant une teneur de 10 à 18 parties en masse par rapport à 100 parties en masse du composant de résine ; et

le moulage du mélange de résine pour obtenir une feuille décorative dans laquelle un produit de l'épaisseur (mm) et de la teneur en pigment blanc à base d'oxyde de titane (parties en masse) est de 2 300 ou plus, dans lequel le b* de la résine à base de PET recyclé dans l'espace chromatique L*a*b CIE 1976 est de 9 ou moins, dans lequel b* est une coordonnée de couleur définie dans JIS Z 8781-4:2013 « Colorimétrie - Partie 4 : Espace chromatique L*a*b CIE 1976 » (norme internationale correspondante : ISO 11664-4:2008), déterminée selon la méthode d'essai décrite dans JIS K 7390:2003.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S56080417 A
- JP H11130877 A
- JP 2009030062 A
- JP 2002348448 A
- JP H0923988 B
- EP 0930330 A

### Non-patent literature cited in the description

- Colorimetry-Part 4: CIE 1976 L*a*b* color space. *JIS Z 8781-4:2013*